# FASCICULE DE BREVET EUROPEEN

(11) **EP 3 097 828 B1**
(45) Date de publication et mention de la délivrance du brevet: **09.05.2018**
(21) Numéro de dépôt: 16169065.6
(22) Date de dépôt: 10.05.2016
(51) Int. Cl.: A47J 31/46

(54) **DISPOSITIF DE DISTRIBUTION DE BOISSONS AMOVIBLE A DOUBLE SORTIE ET MACHINE A CAFE COMPORTANT UN TEL DISPOSITIF**
ENTNEHMBARE GETRÄNKEAUSGABEVORRICHTUNG MIT DOPPELTAUSGANG UND KAFFEEMACHINE MIT SOLCHER VORRICHTUNG
REMOVABLE BEVERAGE DISTRIBUTION DEVICE WITH DOUBLE OUTLET AND COFFEE MACHINE WITH SUCH A DEVICE

(30) Priorité: 29.05.2015 FR 1554851
(43) Date de publication de la demande: 30.11.2016
(73) Titulaire: SEB S.A., 69130 Ecully (FR)
(72) Inventeur: DUPUY, Christian, 53440 LA BAZOGE MONTPINCON (FR); GOUBAUD, Thierry, 53300 ST FRAIMBAULT DE PRIERES (FR)
(74) Mandataire: Bourrières, Patrice

(56) Documents cités:
- EP-B1- 1 827 185
- WO-A1-2012/150398
- WO-A2-2011/048485
- DE-U1- 29 810 291
- FR-A7- 2 068 243
- GB-A- 126 954

## Description

La présente invention se rapporte au domaine technique général des appareils de production de boissons, en particulier des dispositifs destinés à coopérer avec une buse de sortie café d'une machine à café pour produire une boisson.

Il est connu du document DE3742930 de réaliser un dispositif de distribution d'une boisson comportant un conduit d'entrée destiné à coopérer avec une buse de sortie café d'une machine à café et deux conduits de distribution de la boisson destinés à déverser la boisson issue de la buse de sortie café dans deux récipients. Le dispositif de distribution est mobile sur la machine à café entre une position de service dans deux récipients et une position de service dans un récipient. Cependant, la conception d'un tel dispositif qui comporte de nombreuses pièces est chère à mettre en oeuvre. De plus, le dispositif de distribution étant attenant à la machine, il est difficile de le nettoyer.

On connait également du document WO2011048485 un dispositif de distribution d'une boisson.

Le but de la présente invention est de remédier aux inconvénients précités et de proposer un dispositif de distribution d'une boisson ainsi qu'une machine à café mettant en oeuvre ce dispositif qui présente une conception simple et qui soit économique à mettre en oeuvre.

Un autre but de la présente invention est de proposer un dispositif de distribution d'une boisson ainsi qu'une machine à café mettant en oeuvre ce dispositif qui présentent une mise en oeuvre simple et ergonomique, notamment pour le nettoyage.

Ces buts sont atteints avec un dispositif de distribution d'une boisson selon la revendication indépendante 1. Un tel dispositif de distribution est destiné à coopérer avec une machine à café comportant une seule buse de sortie café, agencée avantageusement verticalement. Lorsque le dispositif est séparé de la machine à café, la boisson issue de la buse de sortie café est distribuée dans un récipient positionné sous la buse de sortie café. Lorsque le dispositif est assemblé à la machine à café, la boisson issue de la buse de sortie café est divisée en deux parties par le dispositif et distribuée dans deux récipients positionnés sous les deux conduits de distribution.

Le dispositif de distribution est conçu pour être séparé de la machine et peut donc être nettoyé très facilement, par exemple sous un robinet. Selon l'invention les moyens de maintien du dispositif comportent une partie ferromagnétique ou un aimant.

Cette disposition permet d'assembler ou de séparer le dispositif de distribution de la buse de sortie café très facilement.

Avantageusement, les moyens de positionnement dudit dispositif comportent une protubérance cylindrique et une face d'orientation destinées à coopérer avec les moyens de positionnement agencés sur la buse de sortie café.

Cette disposition permet d'obtenir des moyens de positionnement simples et efficaces pour positionner le dispositif de distribution sur la buse de sortie café. De préférence, le dispositif de distribution comporte une zone de préhension, formée notamment par une poignée, ladite poignée comportant la face d'orientation.

La poignée qui comporte la face d'orientation est bien visible lors de l'assemblage et permet d'obtenir une mise en place facile du dispositif de distribution sur la buse de sortie café, même lorsque la zone d'assemblage de la protubérance n'est pas visible.

Avantageusement, la partie ferromagnétique ou l'aimant sont agencés dans la protubérance.

Ainsi, lors de l'assemblage, les forces magnétiques permettent un auto alignement des moyens de positionnement du dispositif, notamment de la protubérance et des moyens de positionnement agencés sur la buse de sortie café.

De préférence, le conduit d'entrée comporte une bordure périphérique, au moins une partie de la bordure périphérique formant le logement de réception.

Avantageusement, le conduit d'entrée comporte un fond plat à partir duquel s'étendent verticalement vers le haut une bordure périphérique et verticalement vers le bas les deux conduits de distribution.

Cette disposition permet d'obtenir un dispositif compact, présentant un encombrement réduit. De plus, le fond plat et la bordure périphérique forment un réservoir tampon qui permet de bien répartir la boisson issue de la buse de sortie café vers les deux conduits de distribution.

De préférence, le fond comporte une excroissance, notamment de forme conique, destinée à coopérer avec une ouverture de distribution de la buse de sortie café.

Cette disposition permet d'orienter le flux de café issu de la buse de sortie café qui peut être saccadé et ainsi, éviter les éclaboussures. Cette disposition permet également de répartir équitablement la boisson issue de la buse de sortie café vers les deux conduits de distribution.

L'invention concerne également une machine à café comportant une buse de sortie café, la machine à café comportant des moyens de maintien et de positionnement coopérant avec des moyens de maintien et de positionnement d'un dispositif de distribution tel que précédemment décrit.

Ainsi un utilisateur peut, à partir de la même procédure, notamment par l'appui sur une seule touche, réaliser soit un café lorsque la machine ne comporte pas le dispositif de distribution, soit deux cafés si la machine comporte le dispositif de distribution.

Avantageusement, les moyens de maintien agencés sur la buse de sortie café comportent une partie ferromagnétique ou un aimant.

Dans le cas où les moyens de maintien agencés sur la buse comportent une partie ferromagnétique, les moyens de maintien agencés sur le dispositif de distribution comportent un aimant. Et réciproquement, si les moyens de maintien agencés sur la buse comportent un aimant, les moyens de maintien agencés sur le dispositif de distribution comportent une partie ferromagnétique.

De préférence, la buse de sortie café et les moyens de maintien et de positionnement sont mobiles, notamment en translation verticale pour s'adapter à une hauteur d'un ou plusieurs récipients agencés sur un repose-tasse de la machine à café.

Ainsi, l'utilisateur peut ajuster la position de la buse de sortie café munie ou non du dispositif de distribution au-dessus d'un ou plusieurs récipients agencés sur un repose-tasse.
Avantageusement, les moyens de positionnement agencés sur la buse de sortie café comportent une face d'appui et un logement cylindrique, la face d'appui de la buse de sortie café coopérant avec la face d'orientation et le logement coopérant avec la protubérance.

La coopération de la face d'appui de la buse de sortie café avec la face d'orientation du dispositif permet de réaliser des premiers moyens de positionnement pour pré-positionner le dispositif de distribution sur la buse de sortie café.

La coopération du logement cylindrique agencé sur la buse de sortie café et de la protubérance cylindrique permet de réaliser des deuxièmes moyens de positionnement simples et efficace. Avantageusement, le logement et la protubérance peuvent comporter des chanfreins ou des parois inclinées pour favoriser l'assemblage.

De manière avantageuse, le logement est agencé à proximité immédiate de la buse de sortie café, la distance entre l'axe du logement et l'axe de la sortie café étant inférieure à 20 millimètres.

De préférence, le conduit d'entrée du dispositif de distribution coopère avec la buse de sortie café de manière non étanche.

Cette disposition permet d'évacuer d'éventuelles surpressions issues de la buse de sortie café lors de la distribution du café, notamment par des passages agencés de part et d'autre de la buse de sortie café.

L'invention sera mieux comprise à l'étude des modes de réalisation pris à titre nullement limitatif et illustrés dans les figures annexées dans lesquelles :
- La figure 1 illustre une vue en perspective d'une machine à café comportant une buse de sortie café.
- La figure 2 illustre une vue en perspective partielle de la machine à café illustrée sur la figure 1 comportant un dispositif de distribution d'une boisson, coopérant avec la buse de sortie café selon un mode particulier de réalisation de l'invention.
- La figure 3 illustre une vue en perspective du dispositif de distribution d'une boisson illustré sur la figure 2.
- La figure 4 illustre une vue suivant le plan de coupe IV du dispositif de distribution d'une boisson coopérant avec une buse de sortie café d'une machine à café illustré sur la figure 2.

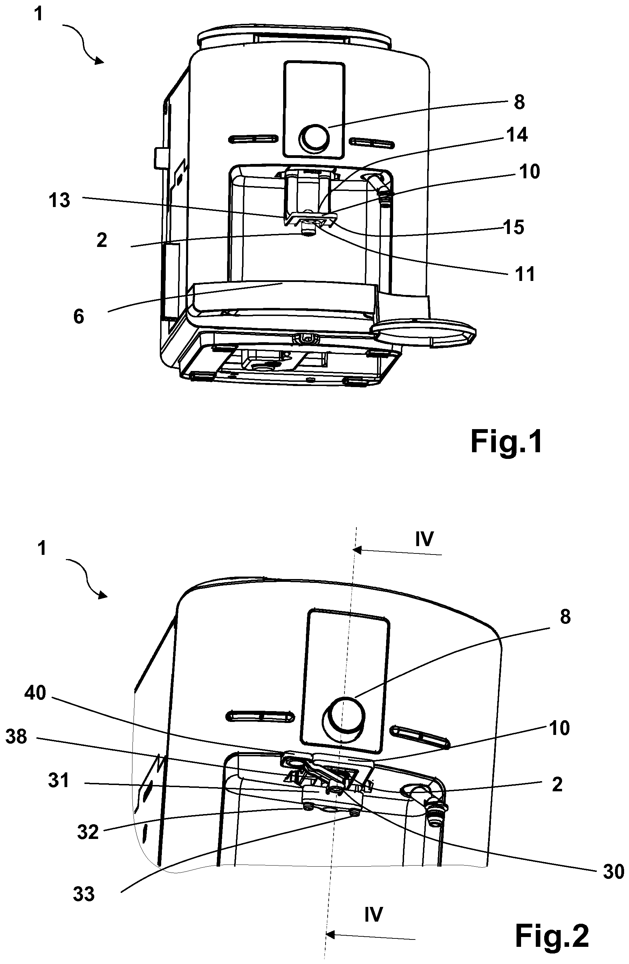

Tel que visible à la figure 1, une machine à café 1 comporte un réservoir à grains de café, un broyeur, une chaudière (non illustrés sur les figures) permettant de produire de l'eau chaude pour alimenter une chambre d'infusion (non illustrée sur les figures) et ainsi préparer un café. Le café est distribué par une buse de sortie café 2 agencée au-dessus d'un repose-tasse 6 recevant un récipient (non illustré sur les figures). La machine à café 1 comporte un tableau de commande 8 permettant de réaliser différents cycles de production d'un café.

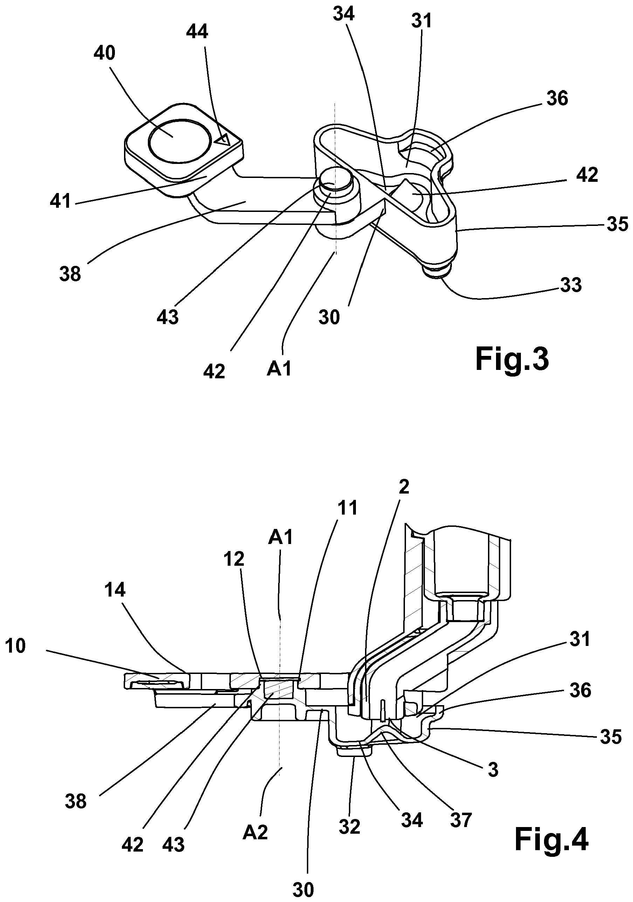

La buse de sortie café 2 comporte une patte de préhension 10 s'étendant horizontalement vers l'extérieur de la machine à café. La patte de préhension 10 comprend une face d'appui 13 latérale, une face supérieure 14 et une face inférieure 15. La face inférieure 15 comporte un logement 11, sensiblement cylindrique d'axe A1 (Fig.4), qui s'étend vers le bas. Le logement 11 comprend une partie ferromagnétique 12, réalisée notamment en un acier ferromagnétique. La face supérieure 14 comporte un repère agencé à proximité de la face d'appui 13 latérale.

Conformément à la figure 2, la machine à café 1 comporte un dispositif 30 de distribution d'une boisson qui est accouplé à la buse de sortie café 2. Tel que visible aux figures 3 et 4, le dispositif 30 de distribution comporte un conduit d'entrée 31 destiné à coopérer avec la buse de sortie café 2 et deux conduits de distribution 32, 33 de la boisson permettant de diviser la boisson issue de la buse de sortie café 2 dans deux récipients. Le conduit d'entrée 31 se termine par un fond 34 plat à partir duquel s'étend verticalement vers le haut une bordure périphérique 35. La bordure périphérique 35 comporte une excroissance latérale 36 de réception de l'extrémité de la buse de sortie café 2. Les deux conduits de distribution 32, 33 s'étendent à partir du fond 34 plat verticalement vers le bas. Le fond 34 comporte une excroissance 37 de forme conique destinée à coopérer avec une ouverture 3 cylindrique de distribution de la buse de sortie café 2.

Le dispositif 30 de distribution comporte une patte 38. La patte 38 est fixée à une première extrémité à la bordure périphérique 35 et à une deuxième extrémité à une poignée 40. La poignée 40, de forme sensiblement parallélépipédique comporte une face d'orientation 41. La poignée 40 comporte un repère 44 agencé à proximité de la face d'orientation 41. La patte 38 comporte une protubérance 42 cylindrique dans laquelle est agencé un aimant 43.

La face d'orientation 41 de la poignée 40 est destinée à coopérer avec la face d'appui 13 de la patte de préhension 10 pour permettre à l'utilisateur de pré-positionner le dispositif 30 de distribution sur la buse de sortie café 2.

La protubérance 42 est destinée à coopérer avec le logement 11 de réception qui présente une forme cylindrique d'axe A2, complémentaire de la forme de la protubérance 42 pour assembler le dispositif 30 de distribution sur la buse de sortie café 2.

La buse de sortie café 2 est mobile entre une position relevée (Fig. 2) dans laquelle un ou deux récipients de grande taille peuvent être placés sur le repose-tasse 6 et une position abaissée (Fig.1) dans laquelle un ou deux récipients de petite taille peuvent être placés sur le repose-tasse 6.

En fonctionnement, pour installer le dispositif 30 de distribution sur la buse de sortie café 2, l'utilisateur saisit la poignée 40 de préhension du dispositif 30 de distribution et amène en contact la face d'orientation 41 de la poignée 40 avec la face d'appui 13 de la patte de préhension 10 de la buse de sortie café 2. Il amène ensuite le repère 44 de la poignée 40 en correspondance avec le repère de la patte de préhension 10 pour pré-positionner le dispositif 30 de distribution sur la patte de préhension 10. Puis, il déplace le dispositif 30 de distribution vers le haut pour assembler la protubérance 42 avec le logement 11 de réception. L'aimant 43 et la partie ferromagnétique 12 maintiennent alors cet assemblage. L'utilisateur peut alors poser deux récipients sur le repose-tasse 6 et ajuster la position de la buse de sortie café 2 et du dispositif 30 de distribution.

L'utilisateur commande la distribution d'un café à partir du tableau de commande 8. La café issu de la sortie café 2 va être divisé en deux par le dispositif 30 de distribution et réparti équitablement dans les deux récipients.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation non représentée sur les figures, les moyens de positionnement du dispositif comportent une protubérance non cylindrique destinée à coopérer avec les moyens de positionnement agencés sur la buse de sortie café, formés par un logement de forme complémentaire à la protubérance. Ainsi, une telle protubérance non cylindrique coopérant avec un logement de forme complémentaire permettent à eux seuls d'orienter le dispositif de distribution.

Dans une autre variante de réalisation non représentée sur les figures, les moyens de maintien de l'extrémité du conduit de distribution sont des moyens mécaniques formés par exemple par une pince du type « pince à linge » comprenant deux mors mobiles entre une position ouverte et une position fermée. La pince comporte un ressort de rappel des mors en position fermée. La pince est destinée à coopérer avec la patte de préhension de la buse de sortie café.

## Revendications

1. Dispositif (30) de distribution d'une boisson comportant un conduit d'entrée (31) destiné à coopérer avec une buse de sortie café (2) d'une machine à café (1) et deux conduits de distribution (32, 33) de la boisson destinés à déverser la boisson issue de la buse de sortie café (2) dans deux récipients, le dispositif (30) de distribution comportant des moyens de maintien (43) et de positionnement (41, 42) destinés à coopérer avec des moyens de maintien (12) et de positionnement (11, 13) agencés sur la buse de sortie café (2), lesdits moyens de maintien (12, 43) et de positionnement (11, 13, 41, 42) permettant d'assembler ou de séparer le dispositif (30) de la buse de sortie café (2) sans faire appel à un outil **caractérisé en ce que** les moyens de maintien dudit dispositif (30) comportent une partie ferromagnétique ou un aimant (43).

2. Dispositif (30) de distribution d'une boisson selon la revendication 1, **caractérisé en ce que** les moyens de positionnement dudit dispositif (30) comportent une protubérance (42) cylindrique et une face d'orientation (41) destinées à coopérer avec les moyens de positionnement (11, 13) agencés sur la buse de sortie café (2).

3. Dispositif (30) de production d'une boisson selon la revendication 2, **caractérisé en ce qu'**il comporte une zone de préhension, formée notamment par une poignée (40), ladite poignée (40) comportant la face d'orientation (41).

4. Dispositif (30) de distribution d'une boisson selon l'une quelconque des revendications 2 à 3, **caractérisé en ce qu'**une partie ferromagnétique ou l'aimant (43) sont agencés dans la protubérance (42).

5. Dispositif (30) de distribution d'une boisson selon l'une quelconque des revendications précédentes, **caractérisé en ce que** le conduit d'entrée (31) comporte un fond (34) plat à partir duquel s'étendent verticalement vers le haut une bordure périphérique (35) et verticalement vers le bas les deux conduits de distribution (32, 33).

6. Dispositif (30) de distribution d'une boisson selon la revendication 5, **caractérisé en ce que** le fond (34) comporte une excroissance (37), notamment de forme conique, destinée à coopérer avec une ouverture (3) de distribution de la buse de sortie café (2).

7. Machine à café (1) comportant une buse de sortie café (2), **caractérisée en ce qu'**elle comporte un dispositif (30) de distribution conforme à l'une des revendications 1 à 6 et **en ce qu'**elle comporte des moyens de maintien (12) et de positionnement (11, 13) coopérant avec des moyens de maintien (43) et de positionnement (41, 42) dudit dispositif (30) de distribution.

8. Machine à café (1) selon la revendication 7, **caractérisée en ce que** les moyens de maintien agencés sur la buse de sortie café (2) comportent une partie ferromagnétique (12) ou un aimant.

9. Machine à café (1) selon l'une quelconque des revendications 7 à 8, **caractérisée en ce que** la buse de sortie café (2) et les moyens de maintien (12) et de positionnement (11, 13) sont mobiles, notamment en translation verticale, pour s'adapter à une hauteur d'un récipient agencé sur un repose-tasse (6) de la machine à café (1).

10. Machine à café (1) selon l'une quelconque des revendications 7 à 9, **caractérisée en ce que** les moyens de positionnement agencés sur la buse de sortie café (2) comportent une face d'appui (13) et un logement (11) cylindrique, la face d'appui (13) de la buse de sortie café (2) coopérant avec la face d'orientation (41) et le logement (11) coopérant avec la protubérance (42).

11. Machine à café (1) selon l'une quelconque des revendications 7 à 10, **caractérisée en ce que** le conduit d'entrée (31) du dispositif de distribution (30) coopère avec la buse de sortie café (2) de manière non étanche.

## Patentansprüche

1. Vorrichtung (30) zur Abgabe eines Getränks, aufweisend eine Einlassleitung (31), die dazu bestimmt ist, mit einer Düse zum Auslassen von Kaffee (2) einer Kaffeemaschine (1) zusammenzuwirken, und zwei Leitungen zur Abgabe (32, 33) des Getränks, die dazu bestimmt sind, das Getränk, das aus der Düse zum Auslassen von Kaffee (2) kommt, in zwei Behälter zu gießen, wobei die Vorrichtung (30) zur Abgabe Mittel zum Halten (43) und zur Positionierung (41, 42) aufweist, die dazu bestimmt sind, mit den Mittel zum Halten (12) und zur Positionierung (11, 13) zusammenzuwirken, die auf der Düse zum Auslassen von Kaffee (2) angeordnet sind, wobei die Mittel zum Halten (12, 43) und zur Positionierung (11, 13, 41, 42) es ermöglichen, die Vorrichtung (30) zusammenzusetzen oder von der Düse zum Auslassen von Kaffee (2) zu trennen, ohne eine Werkzeug hinzuzuziehen, **dadurch gekennzeichnet, dass** die Mittel zum Halten der Vorrichtung (30) ein ferromagnetisches Teil oder einen Magneten (43) aufweisen.

2. Vorrichtung (30) zur Abgabe eines Getränks nach Anspruch 1, **dadurch gekennzeichnet, dass** die Mittel zur Positionierung der Vorrichtung (30) einen zylindrischen Vorsprung (42) und eine Ausrichtungsfläche (41) aufweisen, die dazu bestimmt sind, mit den Mitteln zur Positionierung (11, 13) zusammenzuwirken, die auf der Düse zum Auslassen von Kaffee (2) angeordnet sind.

3. Vorrichtung (30) zur Herstellung eines Getränks nach Anspruch 2, **dadurch gekennzeichnet, dass** sie einen Greifbereich umfasst, der insbesondere durch einen Handgriff (40) gebildet ist, wobei der Handgriff (40) die Ausrichtungsfläche (41) aufweist.

4. Vorrichtung (30) zur Abgabe eines Getränks nach einem der Ansprüche 2 bis 3, **dadurch gekennzeichnet, dass** ein ferromagnetisches Teil oder der Magnet (43) in dem Vorsprung (42) angeordnet sind.

5. Vorrichtung (30) zur Abgabe eines Getränks nach einem der vorhergehenden Ansprüche, **dadurch gekennzeichnet, dass** die Einlassleitung (31) einen flachen Boden (34) aufweist, von dem sich vertikal nach oben eine Umfassungskante (35) und vertikal nach unten die beiden Verteilungsleitungen (32, 33) erstrecken.

6. Vorrichtung (30) zur Abgabe eines Getränks nach Anspruch 5, **dadurch gekennzeichnet, dass** der Boden (34) eine Ausstülpung (37), insbesondere mit konischer Form, aufweist, die dazu bestimmt ist, mit einer Öffnung (3) zur Abgabe der Düse zum Auslassen von Kaffee (2) zusammenzuwirken.

7. Kaffeemaschine (1) mit einer Düse zum Auslassen von Kaffee (2), **dadurch gekennzeichnet, dass** sie eine Vorrichtung (30) zur Abgabe nach einem der Ansprüche 1 bis 6 aufweist, und dass sie Mittel zum Halten (12) und zur Positionierung (11, 13) aufweist, die mit Mitteln zum Halten (43) und zur Positionierung (41, 42) der Vorrichtung (30) zur Abgabe zusammenwirken.

8. Kaffeemaschine (1) nach Anspruch 7, **dadurch gekennzeichnet, dass** die Mittel zum Halten auf der Düse zum Auslassen von Kaffee (2) angeordnet sind, die ein ferromagnetisches Teil (12) oder einen Magneten aufweisen.

9. Kaffeemaschine (1) nach einem der Ansprüche 7 bis 8, **dadurch gekennzeichnet, dass** die Düse zum Auslassen von Kaffee (2) und die Mittel zum Halten (12) und zur Positionierung (11, 13), insbesondere in vertikaler Translation, bewegbar sind, um eine Höhe von einem Behälter anzupassen, der auf einer Tassenabstelleinrichtung (6) der Kaffeemaschine (1) angeordnet ist.

10. Kaffeemaschine (1) nach einem der Ansprüche 7 bis 9, **dadurch gekennzeichnet, dass** die Mittel zur Positionierung, die auf der Düse zum Auslassen von Kaffee (2) angeordnet sind, eine Auflagefläche (13) und ein zylindrisches Gehäuse (11) aufweisen, wobei die Auflagefläche (13) der Düse zum Auslassen von Kaffee (2) mit der Ausrichtungsfläche (41) zusammenwirkt, und wobei das Gehäuse (11) mit dem Vorsprung (42) zusammenwirkt.

11. Kaffeemaschine (1) nach einem der Ansprüche 7 bis 10, **dadurch gekennzeichnet, dass** die Einlassleitung (31) der Vorrichtung zur Abgabe (30) mit der Düse zum Auslassen von Kaffee (2) auf nicht dichte Weise zusammenwirkt.

## Claims

1. Device (30) for dispensing a beverage comprising an inlet conduit (31) intended to cooperate with a coffee outlet nozzle (2) of a coffee machine (1) and two dispensing ducts (32, 33) of the beverage intended to pour the beverage coming from the coffee outlet nozzle (2) into two containers, the dispensing device (30) comprising means for holding (43) and for positioning (41, 42) intended to cooperate with means for holding (12) and for positioning (11, 13) arranged on the coffee outlet nozzle (2), said means for holding (12, 43) and for positioning (11, 13, 41, 42) making it possible to join or to separate the device (30) from the coffee outlet nozzle (2) without using a tool **characterised in that** the means for holding of said device (30) comprise a ferromagnetic part or a magnet (43).

2. Device (30) for dispensing a beverage according to claim 1, **characterised in that** the means for positioning of said device (30) comprise a cylindrical protuberance (42) and an orientation face (41) intended to cooperate with the means for positioning (11, 13) arranged on the coffee outlet nozzle (2).

3. Device (30) for the production of a beverage according to claim 2, **characterised in that** it comprises a gripping zone, formed in particular by a handle (40), said handle (40) comprising the orientation face (41).

4. Device (30) for dispensing a beverage according to any of claims 2 to 3, **characterised in that** a ferromagnetic part or the magnet (43) are arranged in the protuberance (42).

5. Device (30) for dispensing a beverage as claimed in any preceding claim, **characterised in that** the inlet conduit (31) comprises a flat bottom (34) from which vertically extend upwards a peripheral edge (35) and vertically downwards the two dispensing ducts (32, 33).

6. Device (30) for dispensing a beverage according to claim 5, **characterised in that** the bottom (34) comprises a protrusion (37), in particular of tapered shape, intended to cooperate with a dispensing opening (3) of the coffee outlet nozzle (2).

7. Coffee machine (1) comprising a coffee outlet nozzle (2), **characterised in that** it comprises a dispensing device (30) in accordance with one of claims 1 to 6 and **in that** it comprises means for holding (12) and for positioning (11, 13) that cooperate with means for holding (43) and for positioning (41, 42) of said device dispensing device (30).

8. Coffee machine (1) according to claim 7, **characterised in that** the means for holding arranged on the coffee outlet nozzle (2) comprise a ferromagnetic part (12) or a magnet.

9. Coffee machine (1) according to any of claims 7 to 8, **characterised in that** the coffee outlet nozzle (2) and the means for holding (12) and positioning (11, 13) are mobile, in particular in vertical translation, in order to adapt to a height of a container arranged on a cup holder (6) of the coffee machine (1).

10. Coffee machine (1) according to any of claims 7 to 9, **characterised in that** the means for positioning arranged on the coffee outlet nozzle (2) comprise a support face (13) and a cylindrical housing (11), with the support face (13) of the coffee outlet nozzle (2) cooperating with the orientation face (41) and the housing (11) cooperating with the protuberance (42).

11. Coffee machine (1) according to any of claims 7 to 10, **characterised in that** the inlet conduit (31) of the dispensing device (30) cooperates with the coffee outlet nozzle (2) in a non-sealed manner.
